# EUROPEAN PATENT APPLICATION

(11) **EP 4 603 349 A1**
(43) Date of publication of application: **20.08.2025**
(21) Application number: 25158436.3
(22) Date of filing: 17.02.2025
(51) Int. Cl.: B60W 10/06, B60W 30/18, B60W 30/182, B60W 10/18, B60W 10/188, B60W 10/196, B60W 10/198

(54) **METHOD AND SYSTEM FOR CONTROLLING INERTIAL DRIVING MODE OF COMMERCIAL VEHICLE**

(30) Priority: 16.02.2024 KR 20240022664
(71) Applicant: e-Intelligence Co., Ltd., Daegu 42994 (KR)
(72) Inventor: BAE, Kyeong Ryeol, 41970 Daegu (KR); LIM, Hye Seon, 41414 Daegu (KR)
(74) Representative: Ullrich & Naumann PartG mbB

(57) **Abstract**

According to one aspect of the present invention, there is provided a method for controlling an inertial driving mode of a commercial vehicle, the method comprising the steps of: determining at least one of a driving state of a commercial vehicle and a slope state of a road on which the commercial vehicle is driving; and setting a driving mode of the commercial vehicle to an inertial driving mode in response to the driving state of the commercial vehicle satisfying a first condition or the slope state satisfying a second condition, wherein the driving mode of the commercial vehicle is switched from the inertial driving mode to a power driving mode in response to a state of a braking means of the commercial vehicle satisfying a third condition.

## Description

This application is based on the project conducted as follows:
Project Identification Number: 1415187098
Project Number: 20024814
Ministry Name: Ministry of Trade, Industry and Energy
Research Management Institution: Korea Planning & Evaluation Institute of Industrial Technology
Research Program Title: Autonomous Driving Technology Development and Innovation Project
Research Project Title: Development of Hub-Connected L4 Commercial Vehicle Autonomous Driving Predictive Control and Optimal Operation Technology
Host Research Institute: E-Intelligence Co., Ltd.
Research Period: January 1, 2025, through December 31, 2025

### FIELD OF THE INVENTION

The present invention relates to a method and system for controlling an inertial driving mode of a commercial vehicle.

### BACKGROUND

Due to fuel price rises and environmental issues, improving fuel efficiency of vehicles is one of the important technological challenges for modern transportation.

As an example of conventional techniques for improving fuel efficiency of vehicles, a technique has been proposed that sets a vehicle to an inertial driving mode according to a slope of a road (e.g., a slope of a downhill road).

Meanwhile, commercial vehicles such as large cargo trucks may employ braking means different from those of ordinary passenger vehicles (e.g., exhaust brakes or pneumatic brakes) to ensure high braking force and safety. However, the conventional techniques have failed to propose setting an inertial driving mode or a power driving mode according to a state of a braking means of a commercial vehicle.

In this connection, the inventor(s) present a technique for determining at least one of a driving state of a commercial vehicle and a slope state of a road on which the commercial vehicle is driving, setting a driving mode of the commercial vehicle to an inertial driving mode in response to the driving state of the commercial vehicle satisfying a first condition or the slope state satisfying a second condition, and switching the driving mode of the commercial vehicle from the inertial driving mode to a power driving mode in response to a state of a braking means of the commercial vehicle satisfying a third condition, thereby improving fuel efficiency of the commercial vehicle while ensuring driving safety.

### SUMMARY OF THE INVENTION

One object of the present invention is to solve all the above-described problems in the prior art.

Another object of the invention is to determine at least one of a driving state of a commercial vehicle and a slope state of a road on which the commercial vehicle is driving, and set a driving mode of the commercial vehicle to an inertial driving mode in response to the driving state of the commercial vehicle satisfying a first condition or the slope state satisfying a second condition.

Yet another object of the invention is to improve fuel efficiency of a commercial vehicle by setting a driving mode of the commercial vehicle to an inertial driving mode when a driving state of the commercial vehicle satisfies a first condition or a slope state satisfies a second condition.

Still another object of the invention is to improve fuel efficiency of a commercial vehicle while ensuring driving safety by setting a driving mode of the commercial vehicle to an inertial driving mode when sufficient braking force is secured, and switching the driving mode of the commercial vehicle from the inertial driving mode to a power driving mode when sufficient braking force is not secured.

The representative configurations of the invention to achieve the above objects are described below.

According to one aspect of the invention, there is provided a method comprising the steps of: determining at least one of a driving state of a commercial vehicle and a slope state of a road on which the commercial vehicle is driving; and setting a driving mode of the commercial vehicle to an inertial driving mode in response to the driving state of the commercial vehicle satisfying a first condition or the slope state satisfying a second condition, wherein the driving mode of the commercial vehicle is switched from the inertial driving mode to a power driving mode in response to a state of a braking means of the commercial vehicle satisfying a third condition.

According to another aspect of the invention, there is provided a system comprising: a state determination unit configured to determine at least one of a driving state of a commercial vehicle and a slope state of a road on which the commercial vehicle is driving; and a driving mode setting unit configured to set a driving mode of the commercial vehicle to an inertial driving mode in response to the driving state of the commercial vehicle satisfying a first condition or the slope state satisfying a second condition, wherein the driving mode of the commercial vehicle is switched from the inertial driving mode to a power driving mode in response to a state of a braking means of the commercial vehicle satisfying a third condition.

In addition, there are further provided other methods and systems to implement the invention, as well as non-transitory computer-readable recording media having stored thereon computer programs for executing the methods.

According to the invention, it is possible to determine at least one of a driving state of a commercial vehicle and a slope state of a road on which the commercial vehicle is driving, and set a driving mode of the commercial vehicle to an inertial driving mode in response to the driving state of the commercial vehicle satisfying a first condition or the slope state satisfying a second condition.

According to the invention, it is possible to improve fuel efficiency of a commercial vehicle by setting a driving mode of the commercial vehicle to an inertial driving mode when a driving state of the commercial vehicle satisfies a first condition or a slope state satisfies a second condition.

According to the invention, it is possible to improve fuel efficiency of a commercial vehicle while ensuring driving safety by setting a driving mode of the commercial vehicle to an inertial driving mode when sufficient braking force is secured, and switching the driving mode of the commercial vehicle from the inertial driving mode to a power driving mode when sufficient braking force is not secured.

### BRIEF DESCRIPTION OF THE DRAWINGS

FIG. 1 schematically shows the configuration of an entire system for controlling an inertial driving mode of a commercial vehicle according to one embodiment of the invention.
FIG. 2 specifically shows the internal configuration of a driving mode control system according to one embodiment of the invention.

### DETAILED DESCRIPTION OF THE INVENTION

In the following detailed description of the present invention, references are made to the accompanying drawings that show, by way of illustration, specific embodiments in which the invention may be practiced. These embodiments are described in sufficient detail to enable those skilled in the art to practice the invention. It is to be understood that the various embodiments of the invention, although different from each other, are not necessarily mutually exclusive. For example, specific shapes, structures, and characteristics described herein may be implemented as modified from one embodiment to another without departing from the spirit and scope of the invention. Furthermore, it shall be understood that the positions or arrangements of individual elements within each embodiment may also be modified without departing from the spirit and scope of the invention. Therefore, the following detailed description is not to be taken in a limiting sense, and the scope of the invention is to be taken as encompassing the scope of the appended claims and all equivalents thereof. In the drawings, like reference numerals refer to the same or similar elements throughout the several views.

Hereinafter, various preferred embodiments of the invention will be described in detail with reference to the accompanying drawings to enable those skilled in the art to easily implement the invention.

The term "commercial vehicle" herein should be understood as a broad concept that encompasses vehicles used for commercial purposes, such as utility vehicles, cargo vehicles, and special-purpose vehicles.

### Configuration of the entire system

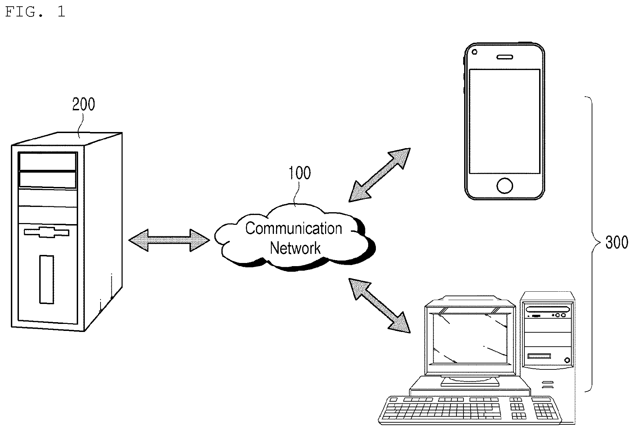

FIG. 1 schematically shows the configuration of the entire system for controlling an inertial driving mode of a commercial vehicle according to one embodiment of the invention.

As shown in FIG. 1, the entire system according to one embodiment of the invention may comprise a communication network 100, a driving mode control system 200, and a device 300.

First, the communication network 100 according to one embodiment of the invention may be implemented regardless of communication modality such as wired and wireless communications, and may be constructed from a variety of communication networks such as local area networks (LANs), metropolitan area networks (MANs), and wide area networks (WANs). Preferably, the communication network 100 described herein may be the Internet or the World Wide Web (WWW). However, the communication network 100 is not necessarily limited thereto, and may at least partially include known wired/wireless data communication networks, known telephone networks, or known wired/wireless television communication networks.

For example, the communication network 100 may be a wireless data communication network, at least a part of which may be implemented with a conventional communication scheme such as WiFi communication, WiFi-Direct communication, Long Term Evolution (LTE) communication, 5G communication, Bluetooth communication (including Bluetooth Low Energy (BLE) communication), infrared communication, and ultrasonic communication. As another example, the communication network 100 may be an optical communication network, at least a part of which may be implemented with a conventional communication scheme such as LiFi (Light Fidelity).

Next, the driving mode control system 200 according to one embodiment of the invention may function to determine at least one of a driving state of the commercial vehicle and a slope state of a road on which the commercial vehicle is driving, and set a driving mode of the commercial vehicle to an inertial driving mode in response to the driving state of the commercial vehicle satisfying a first condition or the slope state satisfying a second condition.

The configuration and functions of the driving mode control system 200 according to the invention will be discussed in more detail below.

Next, the device 300 according to one embodiment of the invention is digital equipment or apparatus capable of connecting to and then communicating with the driving mode control system 200, and any type of digital equipment or apparatus having a memory means and a microprocessor for computing capabilities, such as a smart phone, a tablet, a smart watch, a smart band, smart glasses, a desktop computer, a notebook computer, a workstation, a personal digital assistant (PDA), a web pad, a mobile phone, and an electronic control unit (ECU) in the commercial vehicle, may be adopted as the device 300 according to the invention.

In particular, the device 300 may include an application (not shown) for assisting the user to be provided with the functions according to the invention from the driving mode control system 200. The application may be downloaded from the driving mode control system 200 or an external application distribution server (not shown). Meanwhile, the characteristics of the application may be generally similar to those of a state determination unit 210, a driving mode setting unit 220, a communication unit 230, and a control unit 240 of the driving mode control system 200 to be described below. Here, at least a part of the application may be replaced with a hardware device or a firmware device that may perform a substantially equal or equivalent function, as necessary.

### Configuration of the driving mode control system

Hereinafter, the internal configuration of the driving mode control system 200 crucial for implementing the invention and the functions of the respective components thereof will be discussed.

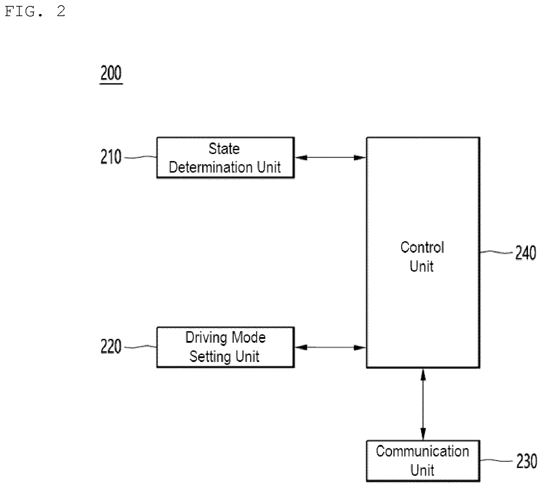

FIG. 2 specifically shows the internal configuration of the driving mode control system 200 according to one embodiment of the invention.

As shown in FIG. 2, the driving mode control system 200 according to one embodiment of the invention may comprise a state determination unit 210, a driving mode setting unit 220, a communication unit 230, and a control unit 240. According to one embodiment of the invention, at least some of the state determination unit 210, the driving mode setting unit 220, the communication unit 230, and the control unit 240 may be program modules to communicate with an external system (not shown). The program modules may be included in the driving mode control system 200 in the form of operating systems, application program modules, and other program modules, while they may be physically stored in a variety of commonly known storage devices. Further, the program modules may also be stored in a remote storage device that may communicate with the driving mode control system 200. Meanwhile, such program modules may include, but are not limited to, routines, subroutines, programs, objects, components, data structures, and the like for performing specific tasks or executing specific abstract data types as will be described below in accordance with the invention.

Meanwhile, the above description is illustrative although the driving mode control system 200 has been described as above, and it will be apparent to those skilled in the art that at least a part of the components or functions of the driving mode control system 200 may be implemented in the device 300 or a server (not shown) or included in an external system (not shown), as necessary.

First, the state determination unit 210 according to one embodiment of the invention may function to determine at least one of a driving state of a commercial vehicle and a slope state of a road on which the commercial vehicle is driving.

According to one embodiment of the invention, the driving state of the commercial vehicle may include driving states such as a speed, an acceleration, a driving direction, a change in the driving direction, and a fuel efficiency of the commercial vehicle, and may also include various driving states of the commercial vehicle other than the aforementioned examples.

For example, the state determination unit 210 according to one embodiment of the invention may determine the driving state of the commercial vehicle on the basis of measurement values acquired from various sensors such as a speed sensor, an acceleration sensor, and a direction sensor.

Meanwhile, the method of determining the driving state of the commercial vehicle by the state determination unit 210 according to one embodiment of the invention is not limited to those described above, but may be diversely changed as long as the objects of the invention may be achieved.

Further, according to one embodiment of the invention, the slope state of the road on which the commercial vehicle is driving may include slope states such as a terrain gradient and a curvature of the terrain gradient, and may also include various slope states other than the aforementioned examples.

For example, the state determination unit 210 according to one embodiment of the invention may determine the slope state of the road on the basis of measurement values acquired from a tilt sensor or the like.

As another example, the state determination unit 210 according to one embodiment of the invention may determine the slope state of the road on which the commercial vehicle is driving from road information that is prestored in a terrain information system (not shown).

Meanwhile, the method of determining the slope state of the road on which the commercial vehicle is driving by the state determination unit 210 according to one embodiment of the invention is not limited to those described above, but may be diversely changed as long as the objects of the invention may be achieved.

Next, the driving mode setting unit 220 according to one embodiment of the invention may function to set a driving mode of the commercial vehicle to an inertial driving mode in response to the driving state of the commercial vehicle satisfying a first condition or the slope state satisfying a second condition.

Specifically, the first condition according to one embodiment of the invention may include a condition for at least one of a speed, an acceleration, and a fuel efficiency of the commercial vehicle.

For example, the first condition according to one embodiment of the invention may include a condition where the speed of the commercial vehicle is not less than a reference speed. As another example, the first condition according to one embodiment of the invention may include a condition where the acceleration of the commercial vehicle is not less than a reference acceleration. As another example, the first condition according to one embodiment of the invention may include a condition where the fuel efficiency of the commercial vehicle is not greater than a reference fuel efficiency.

As another example, the driving mode setting unit 220 according to one embodiment of the invention may function to set the driving mode of the commercial vehicle to the inertial driving mode in response to the driving state of the commercial vehicle satisfying the first condition.

Further, the second condition according to one embodiment of the invention may include a condition for at least one of a terrain gradient and a curvature of the terrain gradient.

For example, the second condition according to one embodiment of the invention may include a condition where the slope state of the road on which the commercial vehicle is driving is a falling gradient in the driving direction of the commercial vehicle. As another example, the second condition according to one embodiment of the invention may include a condition where the slope state of the road on which the commercial vehicle is driving is a curvature that increases a falling gradient in the driving direction of the commercial vehicle.

Therefore, according to the invention, the driving mode of the commercial vehicle may be set to the inertial driving mode in a situation where inertial driving efficiency of the commercial vehicle is optimized.

Meanwhile, the first and second conditions according to the invention may include various conditions other than those described above, and may also include various conditions as long as the objects of the invention may be achieved.

Further, the driving mode according to one embodiment of the invention may include an inertial driving mode and a power driving mode.

Here, according to one embodiment of the invention, in response to the driving mode of the commercial vehicle being set to the inertial driving mode, at least one of an engine, a power transmission means (e.g., a gearbox or transmission), and a braking means (e.g., a primary braking means or an auxiliary braking means) of the commercial vehicle may be controlled such that the commercial vehicle may perform inertial driving. In other words, in response to the driving mode of the commercial vehicle being set to the inertial driving mode, the driving mode setting unit 220 according to one embodiment of the invention may control at least one of the engine, the power transmission means, and the braking means of the commercial vehicle such that the commercial vehicle may perform inertial driving.

Further, according to one embodiment of the invention, in response to the driving mode of the commercial vehicle being set to the power driving mode, at least one of the engine, the power transmission means, and the braking means (e.g., primary braking means or auxiliary braking means) of the commercial vehicle may be controlled such that the commercial vehicle may perform power driving. In other words, in response to the driving mode of the commercial vehicle being set to the power driving mode, the driving mode setting unit 220 according to one embodiment of the invention may control at least one of the engine, the power transmission means, and the braking means of the commercial vehicle such that the commercial vehicle may perform power driving.

In addition, the inertial driving mode according to one embodiment of the invention may be one of a first inertial driving mode, a second inertial driving mode, and a third inertial driving mode.

Specifically, according to one embodiment of the invention, in the first inertial driving mode, the power transmission means of the commercial vehicle may be controlled such that the power transmission means does not make contact with the engine of the commercial vehicle. In other words, in response to the driving mode of the commercial vehicle being set to the first inertial driving mode, the driving mode setting unit 220 according to one embodiment of the invention may control the power transmission means of the commercial vehicle such that the power transmission means does not make contact with the engine of the commercial vehicle (e.g., control a clutch such that the clutch does not make contact with the engine).

Therefore, according to the invention, when the driving mode of the commercial vehicle is set to the first inertial driving mode, power transmission from the engine is blocked, allowing the commercial vehicle to drive using its inertia.

Further, according to one embodiment of the invention, in the second inertial driving mode, the power transmission means and the auxiliary braking means of the commercial vehicle may be controlled such that the power transmission means makes contact with the engine of the commercial vehicle and the auxiliary braking means is not operated. In other words, in response to the driving mode of the commercial vehicle being set to the second inertial driving mode, the driving mode setting unit 220 according to one embodiment of the invention may control the power transmission means and the auxiliary braking means of the commercial vehicle such that the power transmission means makes contact with the engine of the commercial vehicle and the auxiliary braking means is not operated (e.g., control the clutch such that the clutch makes contact with the engine, and control an auxiliary brake to be not operated).

Therefore, according to the invention, when the driving mode of the commercial vehicle is set to the second inertial driving mode, the commercial vehicle may drive using rotational inertia of the engine transmitted by the power transmission means.

Further, according to one embodiment of the invention, in the third inertial driving mode, the power transmission means and the auxiliary braking means of the commercial vehicle may be controlled such that the power transmission means makes contact with the engine of the commercial vehicle and the auxiliary braking means is operated. In other words, in response to the driving mode of the commercial vehicle being set to the third inertial driving mode, the driving mode setting unit 220 according to one embodiment of the invention may control the power transmission means and the auxiliary braking means of the commercial vehicle such that the power transmission means makes contact with the engine of the commercial vehicle and the auxiliary braking means is operated (e.g., control the clutch such that the clutch is coupled to the engine, and control the auxiliary brake to be operated).

Further, on the basis of at least one of the driving state and the slope state corresponding to a first time interval, the driving mode setting unit 220 according to one embodiment of the invention may set the inertial driving mode corresponding to a second time interval as one of the first inertial driving mode, the second inertial driving mode, and the third inertial driving mode.

Here, according to one embodiment of the invention, the first time interval may include a time interval in which the commercial vehicle has already driven, and the second time interval may include a time interval in which the commercial vehicle will drive in the future.

For example, on the basis of at least one of the driving state (e.g., driving state in which the commercial vehicle is driving at a speed of 78 km/h on a road with a speed limit of 80 km/h) and the slope state (e.g., slope state in which a falling gradient in the driving direction of the commercial vehicle is -5 degrees) corresponding to a past 10-second interval preceding a certain time point, the driving mode setting unit 220 according to one embodiment of the invention may set the inertial driving mode corresponding to a future 10-second interval as one of the first inertial driving mode, the second inertial driving mode, and the third inertial driving mode (e.g., there is a need for inertial driving since the road section has a falling gradient, but there is a risk of exceeding the speed limit, so that the third inertial driving mode is set in which the power transmission means and the auxiliary braking means are controlled such that the power transmission means makes contact with the engine and the auxiliary braking means is operated).

As described above, the power transmission means or the auxiliary braking means is controlled in each of the first inertial driving mode, the second inertial driving mode, and the third inertial driving mode according to the invention, so that the magnitude of inertia may differ. Here, according to the invention, since the inertial driving mode corresponding to the second time interval may be set on the basis of at least one of the driving state and the slope state corresponding to the first time interval, an inertial driving mode optimized for the current driving of the commercial vehicle may be set.

Meanwhile, the driving mode setting unit 220 according to one embodiment of the invention may determine a driving speed range corresponding to the second time interval on the basis of at least one of the driving state and the slope state corresponding to the first time interval.

For example, on the basis of at least one of the driving state and the slope state (e.g., slope state in which a falling gradient in the driving direction of the commercial vehicle is -10 degrees) corresponding to a past 10-second interval preceding a certain time point, the driving speed range corresponding to the second time interval may be determined (e.g., since the gradient is greater than a reference gradient, the driving speed range may be determined to be lower than a reference driving speed range in order to ensure driving safety).

Next, according to one embodiment of the invention, the driving mode of the commercial vehicle may be switched from the inertial driving mode to the power driving mode in response to the state of the braking means of the commercial vehicle satisfying the third condition. In other words, the driving mode setting unit 220 according to one embodiment of the invention may set the driving mode of the commercial vehicle to the power driving mode in response to the state of the braking means of the commercial vehicle satisfying the third condition.

Specifically, the braking means according to one embodiment of the invention may include a primary braking means and an auxiliary braking means. Further, the braking means according to one embodiment of the invention may include various braking means such as a hydraulic brake, a pneumatic brake, an exhaust brake, a Jake brake, and a retarder brake, but is not limited to the above examples. Meanwhile, the primary braking means and the auxiliary braking means according to the invention are relative concepts. For example, the exhaust brake may be used as a primary braking means in a specific commercial vehicle, but may be used as an auxiliary braking means in another commercial vehicle.

Further, the state of the braking means according to one embodiment of the invention may include, but is not limited to, temperature of the braking means, a degree of wear of the braking means, an inspection history of the braking means, performance of the braking means, and the like, and may also include any factors that may affect braking force of the braking means.

Furthermore, the third condition according to one embodiment of the invention may include a condition for a state of at least one of a brake pad, a brake disc, and brake oil that constitute the braking means.

For example, the third condition according to one embodiment of the invention may include a condition where temperature of at least one of the brake pad, the brake disc, and the brake oil constituting the braking means is not less than a reference value. As another example, the third condition according to one embodiment of the invention may include a condition where a degree of wear of at least one of the brake pad and the brake disc constituting the braking means is not less than a reference value. As another example, the third condition according to one embodiment of the invention may include a condition where a certain amount of time has passed since the last inspection of the braking means. As another example, the third condition according to one embodiment of the invention may include a condition where performance of the braking means is not greater than a reference value.

When the driving mode of the commercial vehicle is set to the inertial driving mode, a situation may occur where a specific braking means cannot be used (e.g., an engine brake may not be usable in a situation where the power transmission means does not make contact with the engine), and the braking force may suddenly decrease if the temperature of the brake disc is not less than a reference value (commonly known as a fade phenomenon, which reduces the friction force of the brake disc). In this case, the commercial vehicle may suddenly lose its braking capability, increasing the risk of an accident. Therefore, according to the invention, as the driving mode of the commercial vehicle is switched from the inertial driving mode to the power driving mode in response to the state of the braking means of the commercial vehicle satisfying the third condition, the inertial driving mode may be set only in a situation where driving safety is secured whereas the power driving mode may be set otherwise, thus improving fuel efficiency of the commercial vehicle while ensuring driving safety.

Further, the driving mode setting unit 220 according to one embodiment of the invention may switch the inertial driving mode of the commercial vehicle from one of the first inertial driving mode, the second inertial driving mode, and the third inertial driving mode to another inertial driving mode (i.e., another one of the first inertial driving mode, the second inertial driving mode, and the third inertial driving mode) on the basis of the state of the braking means of the commercial vehicle.

For example, the driving mode setting unit 220 according to one embodiment of the invention may switch the driving mode of the commercial vehicle from the first inertial driving mode to the second inertial driving mode or the third inertial driving mode on the basis of the state of the braking means.

As a specific example, when the temperature of the primary braking means (e.g., hydraulic brake) is not less than a reference value, the driving mode setting unit 220 according to one embodiment of the invention may switch the driving mode of the commercial vehicle from the first inertial driving mode to the second inertial driving mode or the third inertial driving mode, so that the power transmission means of the commercial vehicle makes contact with the engine of the commercial vehicle and the auxiliary braking means of the commercial vehicle is operated, in order to secure driving safety.

As another example, the driving mode setting unit 220 according to one embodiment of the invention may switch the driving mode of the commercial vehicle from the second inertial driving mode to the first inertial driving mode or the third inertial driving mode on the basis of the state of the braking means.

As another example, the driving mode setting unit 220 according to one embodiment of the invention may switch the driving mode of the commercial vehicle from the third inertial driving mode to the first inertial driving mode or the second inertial driving mode on the basis of the state of the braking means.

As a specific example, when the temperature of the primary braking means (e.g., hydraulic brake) is not greater than a reference value, driving safety may already be secured and thus the driving mode setting unit 220 according to one embodiment of the invention may switch the driving mode of the commercial vehicle from the second inertial driving mode or the third inertial driving mode to the first inertial driving mode, so that the power transmission means of the commercial vehicle does not make contact with the engine of the commercial vehicle, in order to maximize efficiency of inertial driving.

Meanwhile, according to one embodiment of the invention, the driving mode of the commercial vehicle may be switched from the inertial driving mode to the power driving mode in response to a distance to another vehicle located around the commercial vehicle satisfying a fourth condition.

Specifically, the fourth condition according to one embodiment of the invention may include a condition where the distance to the other vehicle located around the commercial vehicle is not greater than a reference distance. Further, the fourth condition according to one embodiment of the invention may include a condition where a change in the distance (e.g., a degree of decrease in the distance) to the other vehicle located around the commercial vehicle is not less than a reference value.

For example, according to one embodiment of the invention, when a distance to another vehicle located behind the commercial vehicle is not greater than a predetermined distance or a degree of decrease in the distance to the other vehicle is not less than a reference value, it may be determined that the fourth condition is satisfied. Here, the driving mode setting unit 220 according to one embodiment of the invention may switch the driving mode of the commercial vehicle from the inertial driving mode to the power driving mode, in order to reduce the risk of rear-end collision and enhance driving safety.

Next, the communication unit 230 according to one embodiment of the invention may function to enable data transmission/reception from/to the state determination unit 210 and the driving mode setting unit 220.

Lastly, the control unit 240 according to one embodiment of the invention may function to control data flow among the state determination unit 210, the driving mode setting unit 220, and the communication unit 230. That is, the control unit 240 according to one embodiment of the invention may control data flow into/out of the driving mode control system 200 or data flow among the respective components of the driving mode control system 200, such that the state determination unit 210, the driving mode setting unit 220, and the communication unit 230 may carry out their particular functions, respectively.

The embodiments according to the invention as described above may be implemented in the form of program instructions that can be executed by various computer components, and may be stored on a computer-readable recording medium. The computer-readable recording medium may include program instructions, data files, and data structures, separately or in combination. The program instructions stored on the computer-readable recording medium may be specially designed and configured for the present invention, or may also be known and available to those skilled in the computer software field. Examples of the computer-readable recording medium include the following: magnetic media such as hard disks, floppy disks, and magnetic tapes; optical media such as compact disk-read only memory (CD-ROM) and digital versatile disks (DVDs); magneto-optical media such as floptical disks; and hardware devices such as read-only memory (ROM), random access memory (RAM), and flash memory, which are specially configured to store and execute program instructions. Examples of the program instructions include not only machine language codes created by a compiler, but also high-level language codes that can be executed by a computer using an interpreter. The above hardware devices may be changed to one or more software modules to perform the processes of the present invention, and vice versa.

Although the present invention has been described above in terms of specific items such as detailed elements as well as the limited embodiments and the drawings, they are only provided to help more general understanding of the invention, and the present invention is not limited to the above embodiments. It will be appreciated by those skilled in the art to which the present invention pertains that various modifications and changes may be made from the above description.

Therefore, the spirit of the present invention shall not be limited to the above-described embodiments, and the entire scope of the appended claims and their equivalents will fall within the scope and spirit of the invention.

### <DESCRIPTION OF THE REFERENCE NUMERALS>

- 100:: communication network
- 200:: driving mode control system
- 210:: state determination unit
- 220:: driving mode setting unit
- 230:: communication unit
- 240:: control unit
- 300:: device

## Claims

1. A method for controlling an inertial driving mode of a commercial vehicle, the method comprising the steps of:
determining at least one of a driving state of a commercial vehicle and a slope state of a road on which the commercial vehicle is driving; and
setting a driving mode of the commercial vehicle to an inertial driving mode in response to the driving state of the commercial vehicle satisfying a first condition or the slope state satisfying a second condition,
wherein the driving mode of the commercial vehicle is switched from the inertial driving mode to a power driving mode in response to a state of a braking means of the commercial vehicle satisfying a third condition.

2. The method of Claim 1, wherein the first condition includes a condition for at least one of a speed, an acceleration, and a fuel efficiency of the commercial vehicle, and
wherein the second condition includes a condition for at least one of a terrain gradient and a curvature of the terrain gradient.

3. The method of Claim 1, wherein the third condition includes a condition for a state of at least one of a brake pad, a brake disc, and brake oil that constitute the braking means.

4. The method of Claim 1, wherein the inertial driving mode is one of a first inertial driving mode, a second inertial driving mode, and a third inertial driving mode,
wherein in the first inertial driving mode, a power transmission means of the commercial vehicle is controlled such that the power transmission means does not make contact with an engine of the commercial vehicle,
wherein in the second inertial driving mode, the power transmission means of the commercial vehicle and an auxiliary braking means of the commercial vehicle are controlled such that the power transmission means makes contact with the engine of the commercial vehicle and the auxiliary braking means is not operated, and
wherein in the third inertial driving mode, the power transmission means of the commercial vehicle and the auxiliary braking means of the commercial vehicle are controlled such that the power transmission means makes contact with the engine of the commercial vehicle and the auxiliary braking means is operated.

5. The method of Claim 4, wherein in the setting step, on the basis of at least one of the driving state and the slope state corresponding to a first time interval, the inertial driving mode corresponding to a second time interval is set as one of the first inertial driving mode, the second inertial driving mode, and the third inertial driving mode.

6. The method of Claim 1, wherein the driving mode of the commercial vehicle is switched from the inertial driving mode to the power driving mode in response to a distance to another vehicle located around the commercial vehicle satisfying a fourth condition.

7. The method of Claim 1, wherein in the setting step, a driving speed range corresponding to a second time interval is determined on the basis of at least one of the driving state and the slope state corresponding to a first time interval.

8. A non-transitory computer-readable recording medium having stored thereon a computer program for executing the method of Claim 1.

9. A system for controlling an inertial driving mode of a commercial vehicle, the system comprising:
a state determination unit configured to determine at least one of a driving state of a commercial vehicle and a slope state of a road on which the commercial vehicle is driving; and
a driving mode setting unit configured to set a driving mode of the commercial vehicle to an inertial driving mode in response to the driving state of the commercial vehicle satisfying a first condition or the slope state satisfying a second condition,
wherein the driving mode of the commercial vehicle is switched from the inertial driving mode to a power driving mode in response to a state of a braking means of the commercial vehicle satisfying a third condition.

10. The system of Claim 9, wherein the first condition includes a condition for at least one of a speed, an acceleration, and a fuel efficiency of the commercial vehicle, and
wherein the second condition includes a condition for at least one of a terrain gradient and a curvature of the terrain gradient.

11. The system of Claim 9, wherein the third condition includes a condition for a state of at least one of a brake pad, a brake disc, and brake oil that constitute the braking means.

12. The system of Claim 9, wherein the inertial driving mode is one of a first inertial driving mode, a second inertial driving mode, and a third inertial driving mode,
wherein in the first inertial driving mode, a power transmission means of the commercial vehicle is controlled such that the power transmission means does not make contact with an engine of the commercial vehicle,
wherein in the second inertial driving mode, the power transmission means of the commercial vehicle and an auxiliary braking means of the commercial vehicle are controlled such that the power transmission means makes contact with the engine of the commercial vehicle and the auxiliary braking means is not operated, and
wherein in the third inertial driving mode, the power transmission means of the commercial vehicle and the auxiliary braking means of the commercial vehicle are controlled such that the power transmission means makes contact with the engine of the commercial vehicle and the auxiliary braking means is operated.

13. The system of Claim 12, wherein the driving mode setting unit is configured to, on the basis of at least one of the driving state and the slope state corresponding to a first time interval, set the inertial driving mode corresponding to a second time interval as one of the first inertial driving mode, the second inertial driving mode, and the third inertial driving mode.

14. The system of Claim 9, wherein the driving mode of the commercial vehicle is switched from the inertial driving mode to the power driving mode in response to a distance to another vehicle located around the commercial vehicle satisfying a fourth condition.

15. The system of Claim 9, wherein the driving mode setting unit is configured to determine a driving speed range corresponding to a second time interval on the basis of at least one of the driving state and the slope state corresponding to a first time interval.
